# EUROPEAN PATENT SPECIFICATION

(11) **EP 1 175 310 B1**
(45) Date of publication and mention of the grant of the patent: **30.10.2002**
(21) Application number: 00931161.4
(22) Date of filing: 28.04.2000
(51) Int. Cl.: B60M 3/00

(54) **ELECTRICITY SUPPLY SYSTEM FOR TRACTION**
STROMVERSORGUNGSSYSTEM FÜR EISENBAHN
SYSTEME D'ALIMENTATION EN ELECTRICITE POUR SYSTEME DE TRACTION

(30) Priority: 30.04.1999 GB 9910123
(43) Date of publication of application: 30.01.2002
(73) Proprietor: Balfour Beatty PLC, London SW1V 1LQ (GB)
(72) Inventor: SCHÜTTE, Thorsten, S-722 28 Västeras (SE)
(74) Representative: Reyier, Ann-Mari
(86) International application number: EP0004183
(87) International publication number: WO00066389

(56) References cited:
- DE-C- 301 503
- R.J. HILL: "Electric railway traction part 3 traction power supplies" POWER ENGINEERING JOURNAL, - December 1994 (1994-12) pages 275-286, XP002145151 cited in the application
- TRISTAN A. KNESCHKE: "Simple method for determination of substation spacing for AC and DC electrification systems" IEEE TRANSACTIONS ON INDUSTRY APPLICATIONS, vol. 22, no. 4, - August 1986 (1986-08) pages 763-780, XP002128577 New York

## Description

### BACKGROUND TO THE INVENTION

The present invention relates to an electricity supply system for traction.

The use of booster transformers (BTs) in traction power supplies is described in R.J. Hill, "Electric Railway Traction - Part 3 - Traction Power Supplies", Power Engineering Journal, December 1994, pp 275-286. BTs rated at about 100 to 150 kVA are placed at intervals of approximately 3 km, for a 25 kv, 50 Hz supply, or approximately 5 km, for a 16 kV, 16 ²/₃ Hz supply, along a catenary. The primary winding of each BT is connected across a gap in the contact wire. A return conductor is provided in parallel with the rails and the secondary of the BT is connected into the return conductor. The turns ratio of the BT is unity and traction return current is forced from the rails and earth to flow through the return conductor and transformer secondary to equalise the Ampere-turns in the core set up by the primary current. This arrangement provides a low feeding impedance and reduces earth currents which might otherwise cause interference with adjacent telecommunications circuits.

As an alternative to BTs, autotransformers (ATs) may be used, as also described in Hill. The winding of each AT is connected between the catenary and an auxiliary feeder, with the rails tied to an intermediate point. The train draws current from two adjacent ATs, the total supply current being half the train current. Rail currents flow through the AT windings in order to maintain the Ampere-turn balance in the core. In contrast to BT current balancing, the AT system operates by balancing voltages. One disadvantage of ATs is their high cost. Another disadvantage is that the reduction in earth currents is less effective if the distance between two adjacent ATs is greater than twice the typical distance between two BTs in a conventional BT system.

### SUMMARY OF THE INVENTION

The present invention provides an electricity supply system for traction, comprising a supply conductor, a return conductor, a positive feeder conductor and a negative feeder conductor, all four of said conductors being connected to a winding of each of a plurality of autotransformers provided at intervals along said conductors, a current booster transformer having one winding connected into the positive feeder conductor and another winding connected into the negative feeder conductor being provided in the or each interval between the autotransformers, and at least one further current booster transformer having one winding connected into the supply conductor and another winding connected into the return conductor in the or each interval between the autotransformers.

Preferably there are a plurality of said further current booster transformers in the or each interval.

The positive feeder conductor may be connected to the same point of the autotransformer winding as the supply conductor, which is usually a catenary. Alternatively, the positive feeder may be connected to a different point of the autotransformer and be at a higher voltage than the supply conductor. Many voltage combinations are possible. In a particular example, allowing the use of standard equipment already available, the supply conductor is at a nominal voltage of 16.5 kV and the positive and negative feeder conductors are symmetrical about ground, at nominal voltages of ± 27.5 kV. This gives effective voltages of approximately 15 kV and approximately ± 25 kV for the supply conductor and the two feeder conductors respectively. The frequency is preferably 16.7 Hz. Such a system has a very high transmission capability due to the low frequency.

Only one high voltage BT linking the positive and negative feed conductors is required per interval. As the catenary only carries the local conductor between the autotransformers, it can be disconnected, for example after being damaged, without affecting power transmission through the positive and negative feeders to adjacent sections where the catenary is intact. Since there is current balance between the positive and negative feeder conductors, they can be mounted on separate poles from the catenary and do not have to follow the railway between the autotransformers.

The return conductor may be constituted by the rails along which vehicles run, or it may be provided separately and connected to the rails in parallel.

### BRIEF DESCRIPTION OF THE DRAWINGS

The present invention will now be described in more detail, by way of example only with reference to the accompanying drawings, in which:-
Figure 1 is a circuit diagram of an electricity supply system according to a first embodiment of the invention; and
Figures 2 and 3 show systems according to second and third embodiments respectively.

### DETAILED DESCRIPTION OF THE PREFERRED EMBODIMENT

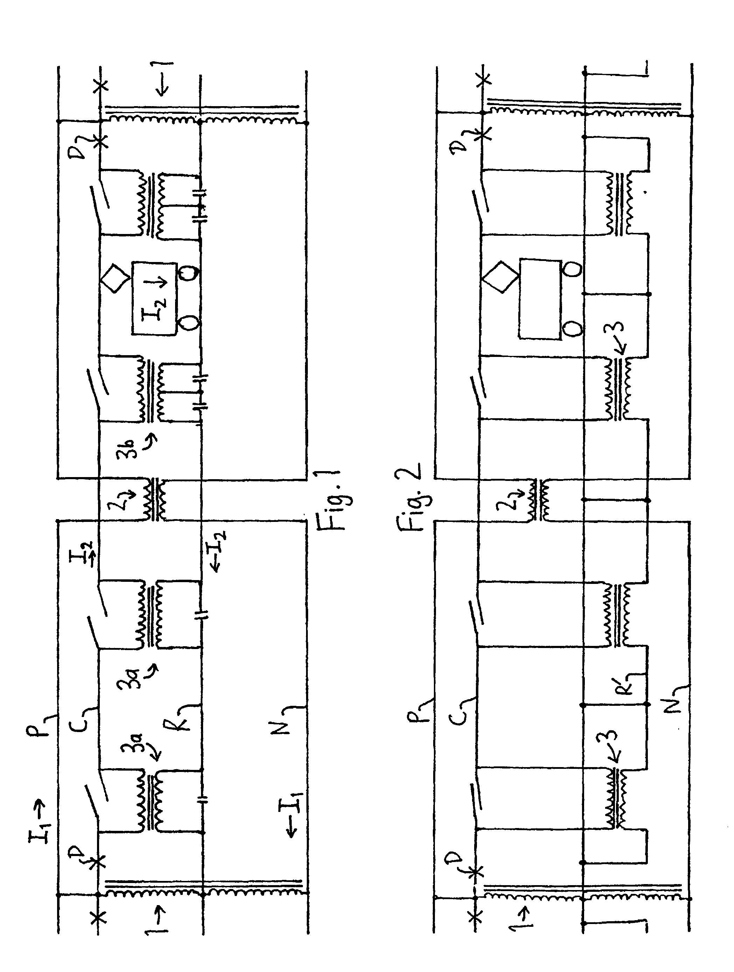

Figure 1 shows a traction power supply system comprising a catenary C and rails R which constitute a return conductor. A positive feeder P and a negative feeder N are provided in parallel with the catenary.

The winding of each of a number of ATs 1 has one end connected to the catenary C and positive feeder P, its mid-point connected to the rails R and its other end connected to the negative feeder N.

A BT 2 has one winding connected into the positive feeder P and its other winding connected into the negative feeder N. Only one BT 2 is required in each interval between the ATs 1 as there is no leakage to ground from the positive and negative feeders.

A number of BTs 3a, 3b are provided, each having one winding connected into the catenary C and its other winding connected into the rails R. As shown at 3a, the BT winding may be connected across a single gap in the rails. Preferably however, there are two gaps in the rails and the mid-point of the winding of the BT 3b is connected to the rails between the gaps in order to reduce dangerous voltages between the sections of the rails.

The BT 2 ensures that the positive and negative feeders P, N carry a balanced current I₁ from a feeding station to remote consumers. The BTs 3a, 3b ensure that the catenary C and return conductor R carry a balanced local supply current I₂.

The catenary C can easily be disconnected from the ATs 1 using disconnecters D, without affecting power transmission to neighbouring sections via the positive and negative feeders P, N.

Figure 2 shows an alternative embodiment in which a return conductor R' is provided in parallel with the rails and connected thereto at intervals. The BTs balancing the return current with the catenary current are designated by 3.

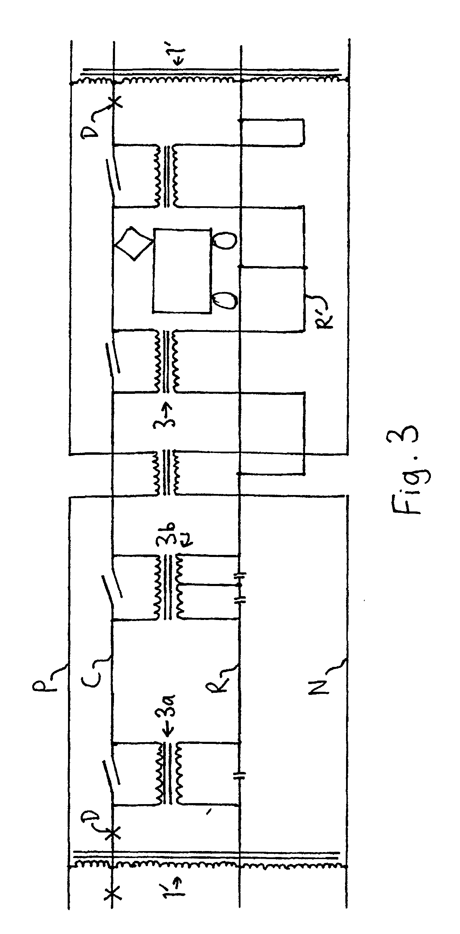

Figure 3 shows a third embodiment of the invention in which the positive feeder P is at a higher voltage than the catenary C, each AT 1' being extended and the catenary no longer being connected to the end of the AT winding.

Whilst many voltage combinations are possible, one advantageous example is given in the table:

| Conductor | Maximum Voltage | Nominal Voltage |
|---|---|---|
| C | + 16.5 kV | + 15 kV |
| P | + 27.5 kV | + 25 kV |
| N | - 27.5 kV | - 25 kV |

In this example the frequency is 16.7 Hz.

The nominal voltage of 50 kV between the positive and negative feeders is the same as in conventional ±25 kV, 50 or 60 Hz systems, and equipment already made for such systems can be used in the invention. However, the lower frequency gives a very high transmission capability.

It is envisaged that existing BT systems can be adapted in accordance with the invention by providing ATs and positive and negative feeders. The distance between the successive ATs will be much greater than in conventional AT systems and thus fewer expensive ATs are required.

## Claims

1. An electricity supply system for traction, comprising a supply conductor (C), a return conductor (R), a positive feeder conductor (P) and a negative feeder conductor (N), all four of said conductors being connected to a winding of each of a plurality of autotransformers (1) provided at intervals along said conductors; a current booster transformer (2), having one winding connected into the positive feeder conductor (P) and another winding connected into the negative feeder conductor (N), being provided in the or each interval between the autotransformers (1) and at least one further current booster transformer (3a,3b), having one winding connected into the supply conductor (C) and another winding connected into the return conductor (R), in the or each interval between the autotransformers (1).

2. A system according to claim 1, comprising a plurality of said further current booster transformers (3a,3b) in the or each interval.

3. A system according to claim 1 or 2, wherein the positive feeder conductor (P) is connected to the same point of the autotransformer winding as the supply conductor (C).

4. A system according to claim 1 or 2, wherein the positive feeder (P) is connected to a different point of the autotransformer winding from the point at which the supply conductor (C) is connected and the positive feeder is at a higher voltage than the supply conductor.

5. A system according to claim 4, wherein the supply conductor (C) is at a nominal voltage of approximately 15 kV, and the positive and negative feeder conductors (P,N) are symmetrical about ground, and are at nominal voltages of approximately ± 25 kV.

6. A system according to any preceding claim, having a frequency of approximately 16.7 Hz.

7. A system according to any preceding claim, wherein the return conductor (R) is constituted by rails along which vehicles are constrained to run.

8. A system according to any one of claims 1 to 6, wherein the return conductor (R) is connected in parallel with rails along which vehicles are constrained to run.

## Patentansprüche

1. Ein Elektrizitätsversorgungssystem für Bahnbetrieb, beinhaltend einen Versorgungsleiter (C), einen Rückleiter (R), einen positiven Speiseleiter (P) und einen negativen Speiseleiter (N), wobei alle vier erwähnten Leiter mit einer Wicklung eines jeden von einer Mehrzahl in Abständen entlang der erwähnten Leiter angeordneten Spartransformatoren verbunden sind, einen Saugtransformator (2), eine Wicklung in den positiven Speiseleiter (P) und eine andere Wicklung in den negativen Speiseleiter (N) verbunden habend und in dem Zwischenraum oder den Zwischenräumen zwischen den Spartransformatoren angeordnet seiend und wenigsten einen weiteren Saugtransformator (3a, 3b), eine Wicklung in den Versorgungsleiter (C) und eine andere Wicklung in den Rückleiter (R) verbunden habend, in dem Zwischenraum oder den Zwischenräumen zwischen den Spartransformatoren (1).

2. Ein System nach Anspruch 1, einen Mehrzahl der erwähnten weiteren Saugtransformatoren (3a, 3b) in dem oder jedem Zwischenraum beinhaltend.

3. Ein System nach Anspruch 1 oder 2, wobei der positive Speiseleiter (P) and den selben Punkt an der Wicklund des Spartransformators wie der Versorgungsleiter (C) angeschlossen ist.

4. Ein System nach Anspruch 1 oder 2, wobei der positive Speiseleiter (P) an einem Punkt der Wicklung des Spartransformators angeschlossen ist, der verschieden ist vom Punkt an der der Versorgungsleiter (C) angeschlossen ist und der positive Speiseleiter eine höhere Spannung hat als der Versorgungsleiter.

5. Ein System nach Anspruch 4, wobei der Versorgungsleiter (C) eine Nennspannung von etwa 15 kV hat, positiver und negativer Speiseleiter (P, N) gegen Erde symmetrisch sind und Nennspannungen von etwa +/- 25 kV haben.

6. Ein System nach einem der vorgenannten Ansprüche mit einer Frequenz von etwa 16.7 Hz.

7. Ein System nach einem der vorgenannten Ansprüche, wobei der Rückleiter (R) aus Schienen besteht, an denen entlang die Fahrzeuge geführt sind.

8. Ein System nach einem der vorgenannten Ansprüche, wobei der Rückleiter (R) zu den Schienen, an denen entlang die Fahrzeuge geführt sind, parallel geschaltet ist.

## Revendications

1. Système d'alimentation en électricité pour traction, comprenant un conducteur d'alimentation (C), un conducteur de retour (R), un conducteur d'amenée positif (P) et un conducteur d'amenée négatif (N), tous les quatre conducteurs précités étant connectés à un enroulement de chacun d'une pluralité d'autotransformateurs (1) disposés à intervalles le long desdits conducteurs ; un transformateur survolteur de courant (2), ayant un enroulement connecté dans le conducteur d'amenée positif (P) et un autre enroulement connecté dans le conducteur d'amenée négatif (N), étant disposé dans le ou chaque intervalle entre les autotransformateurs (1) et au moins un autre transformateur survolteur de courant (3a, 3b), ayant un enroulement connecté dans le conducteur d'alimentation (C) et un autre enroulement connecté dans le conducteur de retour (R), dans le ou chaque intervalle entre les autotransformateurs (1).

2. Système selon la revendication 1, comprenant une pluralité desdits autres transformateurs survolteurs de courant (3a, 3b) dans le ou chaque intervalle.

3. Système selon l'une des revendications 1 ou 2, dans lequel le conducteur d'amenée positif (P) est connecté au même point de l'enroulement d'autotransformateur que le conducteur d'alimentation (C).

4. Système selon l'une des revendications 1 ou 2, dans lequel le conducteur d'amenée positif (P) est connecté à un point de l'enroulement d'autotransformateur différent du point auquel le conducteur d'alimentation (C) est connecté et le conducteur d'amenée positif est à une tension supérieure au conducteur d'alimentation.

5. Système selon la revendication 4, dans lequel le conducteur d'alimentation (C) est à une tension nominale d'approximativement 15 kV, et les conducteurs d'amenée positif et négatif (P, N) sont symétriques autour de la terre, et sont à des tensions nominales d'approximativement ± 25 kV.

6. Système selon l'une quelconque des revendications précédentes, ayant une fréquence d'approximativement 16,7 Hz.

7. Système selon l'une quelconque des revendications précédentes, dans lequel le conducteur de retour (R) est constitué par des rails le long desquels les véhicules sont contraints d'avancer.

8. Système selon l'une quelconque des revendications 1 à 6, dans lequel le conducteur de retour (R) est connecté en parallèle avec des rails le long desquels les véhicules sont contraints d'avancer.
